# EUROPEAN PATENT SPECIFICATION

(11) **EP 4 682 827 B1**
(45) Date of publication and mention of the grant of the patent: **21.10.2026**
(21) Application number: 25180891.1
(22) Date of filing: 04.06.2025
(51) Int. Cl.: G06T 7/73

(54) **USER-ROBOT INTERACTION SYSTEM**
BENUTZER-ROBOTER-INTERAKTIONSSYSTEM
SYSTÈME D'INTERACTION UTILISATEUR-ROBOT

(30) Priority: 17.07.2024 IT 202400016549
(43) Date of publication of application: 21.01.2026
(73) Proprietor: Clementoni S.P.A., 62019 Recanati (MC) (IT)
(72) Inventor: SASSO, Michele, 60022 CASTELFIDARDO (AN) (IT); GIORDANI, Alessia, 60027 OSIMO (AN) (IT)
(74) Representative: Baldi, Claudio

(56) References cited:
- US-A1- 2020 030 971
- FILIATRAULT SYLVAIN ET AL: "Human arm motion imitation by a humanoid robot", 2014 IEEE INTERNATIONAL SYMPOSIUM ON ROBOTIC AND SENSORS ENVIRONMENTS (ROSE) PROCEEDINGS, IEEE, 16 October 2014 (2014-10-16), pages 31 - 36, XP032682298, DOI: 10.1109/ROSE.2014.6952979
- ANONYMOUS: "Nao (robot) - Wikipedia", 16 July 2024 (2024-07-16), XP093242956, Retrieved from the Internet <URL:https://en.wikipedia.org/w/index.php?title=Nao_(robot)&oldid=1234756592> [retrieved on 20250124]
- FERNANDO ZUHER ET AL: "Recognition of Human Motions for Imitation and Control of a Humanoid Robot", ROBOTICS SYMPOSIUM AND LATIN AMERICAN ROBOTICS SYMPOSIUM (SBR-LARS), 2012 BRAZILIAN, IEEE, 16 October 2012 (2012-10-16), pages 190 - 195, XP032274889, ISBN: 978-1-4673-4650-4, DOI: 10.1109/SBR-LARS.2012.38
- ELBASIONY REDA ET AL: "Humanoids skill learning based on real-time human motion imitation using Kinect", INTELLIGENT SERVICE ROBOTICS, SPRINGER BERLIN HEIDELBERG, BERLIN/HEIDELBERG, vol. 11, no. 2, 15 February 2018 (2018-02-15), pages 149 - 169, XP036452276, ISSN: 1861-2776, [retrieved on 20180215], DOI: 10.1007/S11370-018-0247-Z
- IJSPEERT A J ET AL: "Movement imitation with nonlinear dynamical systems in humanoid robots", PROCEEDINGS / 2002 IEEE INTERNATIONAL CONFERENCE ON ROBOTICS AND AUTOMATION : MAY 11 - 15, 2002, WASHINGTON, D.C, IEEE SERVICE CENTER, PISCATAWAY, NJ, vol. 2, 11 May 2002 (2002-05-11), pages 1398, XP032882920, ISBN: 978-0-7803-7272-6, DOI: 10.1109/ROBOT.2002.1014739
- BYUNGIN YOO ET AL: "RoVatar", 20140426; 1077952576 - 1077952576, 26 April 2014 (2014-04-26), pages 1465 - 1470, XP058047720, ISBN: 978-1-4503-2474-8, DOI: 10.1145/2559206.2581159
- ARAVIND SIVAKUMAR ET AL: "Robotic Telekinesis: Learning a Robotic Hand Imitator by Watching Humans on Youtube", ARXIV.ORG, CORNELL UNIVERSITY LIBRARY, 201 OLIN LIBRARY CORNELL UNIVERSITY ITHACA, NY 14853, 24 July 2022 (2022-07-24), XP091278415

## Description

The present invention relates to a user-robot interaction system. The term "robot" refers to an element equipped with actuators that control the movements of the robot or parts of the robot. Such a system is particularly suitable for being used in a game in which the robot makes movements similar or compatible with those performed by the user, who may be a child. Furthermore, such a system is particularly suitable for being used by disabled users with motor and cognitive difficulties.

In the field of robotics, user-robot interaction systems are known, which are configured to have the robot perform certain movements based on the user's movements. However, such systems are particularly complex and therefore they are exclusively applied in the specific field of industrial automation.

Examples of robots that interact with a user are described in the following documents:
FILIATRAULT SYLVAIN ET AL: "Human arm motion imitation by a humanoid robot." 2014 IEEE INTERNATIONAL SYMPOSIUM ON ROBOTIC AND SENSORS ENVIRONMENTS (ROSE) PROCEEDINGS. IEEE, October 16, 2014
FERNANDO ZUHER ET AL: "Recognition of Human Motions for Imitation and Control of a Humanoid Robot", ROBOTICS SYMPOSIUM AND LATIN AMERICAN ROBOTICS SYMPOSIUM (ABR-LARS). 2012 BRAZILIAN, IEEE, October 16, 2012
ELBASIONY REDA ET AL: "Humanoids skill learning based on real-time human motion imitation using Kinect". INTELLIGENT SERVICE ROBOTICS. SPRINGER BERLIN HEIDELBERG. vol. 11, no. 2. February 15, 2018

US2020030971A1 discloses a robotic manipulation system for executing a domain-specific application in an instrumented environment with electronic manipulation mini libraries.

The purpose of the present invention is to eliminate the drawbacks of the prior art by providing a user-robot interaction system that is suitable for being used as a game for a child or as a learning system for a disabled person with motor and cognitive difficulties.

Another purpose is to provide such a user-robot interaction system that is reliable, accurate, and inexpensive.

These purposes are achieved in accordance with the invention with the characteristics of the attached independent claims.

Advantageous embodiments of the invention appear from the dependent claims.

Additional features of the invention will become clearer from the following detailed description, referring to a purely exemplary and therefore non-limiting embodiment illustrated in the accompanying drawings, wherein:
Fig. 1 is a block diagram schematically illustrating the user-robot interaction system according to the invention;
Fig. 2 is a diagrammatic view illustrating the robot actuators;
Fig. 3 is a block diagram illustrating the user pose algorithm in greater detail;
Fig. 4 is a diagrammatic view illustrating a shape obtained from an image of the user and the keypoints identified on said shape;
Fig. 5 is a block diagram illustrating the robot pose algorithm in greater detail;
and Fig. 6 is a block diagram illustrating the start and end position detection algorithm in greater detail.

With the aid of the figures, the user-robot interaction system according to the invention, which is comprehensively indicated with reference numeral 100, is described.

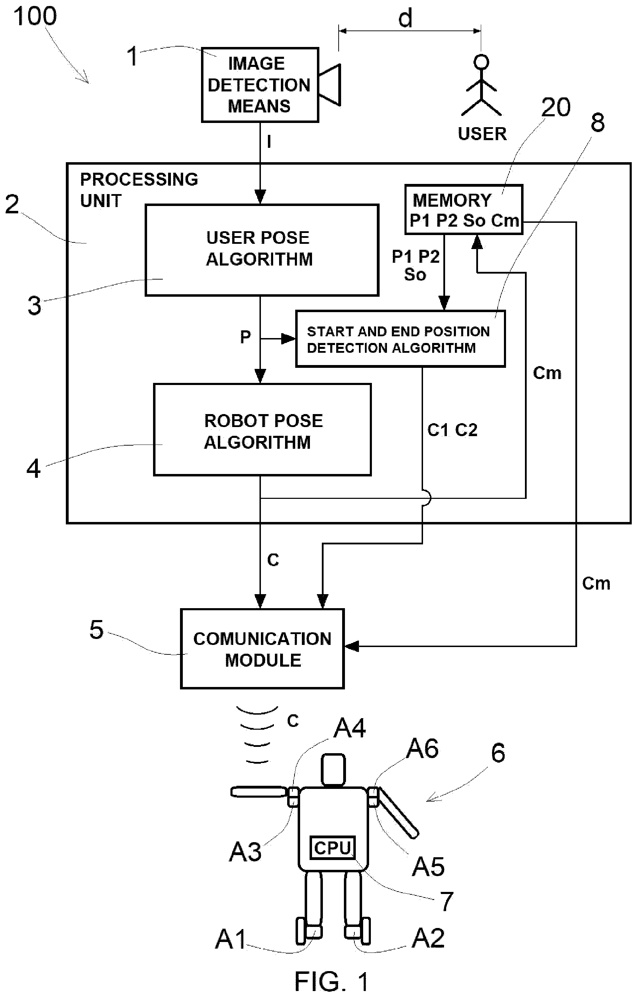

With reference to Fig. 1, the system (100) comprises a robot (6) that has at least one actuator (A1, ... A6) that moves a part of the robot.

The system (100) comprises image detection means (1) suitable for capturing a moving user to provide a digital image (I) of the user in various positions assumed by the user while moving.

The image detection means (1) may comprise a video camera or an RGB camera with depth sensors and motion acquisition devices.

The image detection means (1) are connected to a processing unit (2) to process the image (I) captured by the image detection means (1).

The processing unit (2) is configured to implement two algorithms, namely a user pose algorithm (3) and a robot pose algorithm (4).

Based on the image (I) from the image detection means (1), the user pose algorithm (3) identifies keypoints in the image and calculates a position (P) of said keypoints.

Based on the position (P) of the keypoints calculated by the user pose algorithm (3), the robot pose algorithm (4), processes control signals (C) suitable for operating the actuators (A1, ...A6) of the robot to move the robot.

The system (100) comprises a wireless communication module (5) connected to the processing unit (2) to wirelessly control the actuators (A1, ... A6) of the robot.

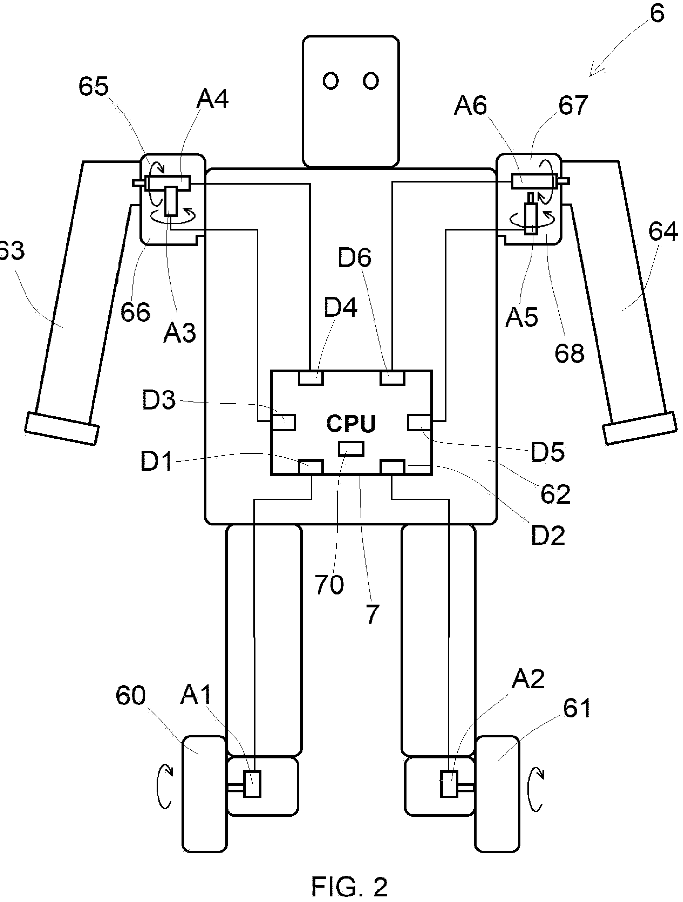

With reference to Fig. 2, the robot (6) is supported on two wheels (60, 61). In such a case, the robot comprises a first actuator (A1) and a second actuator (A2) consisting of electric motors that rotate the two wheels (60, 61) respectively. In this way, the robot (6) can rotate and move in any direction.

The robot (6) has a body (62) and two arms (63, 64) that are movable relative to the body (62). The right arm (63) is moved by two actuators (A3, A4) consisting of electric motors with axes of rotation orthogonal to each other. The left arm (64) is moved by two actuators (A5, A6) consisting of electric motors with axes of rotation orthogonal to each other.

The right arm (63) is mounted so as to rotate with respect to a first joint (65) around a horizontal axis. The first joint (65) is mounted so as to rotate around a vertical axis with respect to a first support (66) integral with the body (62). A third actuator (A3) rotates the first joint (65). A fourth actuator (A4) rotates the right arm (63).

The left arm (64) is mounted so as to rotate with respect to a second joint (67) around a horizontal axis. The second joint (67) is mounted so as to rotate around a vertical axis with respect to a second support (68) integral with the body (62). A fifth actuator (A5) rotates the second joint (67). A sixth actuator (A6) rotates the left arm (64).

The actuation of the third and fifth actuator (A3, A5) moves the arms (63, 64) horizontally to the right or to the left. The activation of the fourth and sixth actuator (A4, A6) lowers or raises the arms (63, 64).

The robot (6) comprises a CPU (7) wherein drivers (D1, ... D6) are installed to control the actuators (A1, A6) of the robot, respectively.

The CPU (7) is connected to a wireless receiver (70) connected to the communication module (5) to receive control signals (C) for actuating the actuators (A1, ...A6). By way of example, the communication module (5) and the wireless receiver (70) may be of Bluetooth, Wi-Fi, or similar type. Preferably, the communication module (5) and the wireless receiver (70) are of Bluetooth Low Energy (BLE) type.

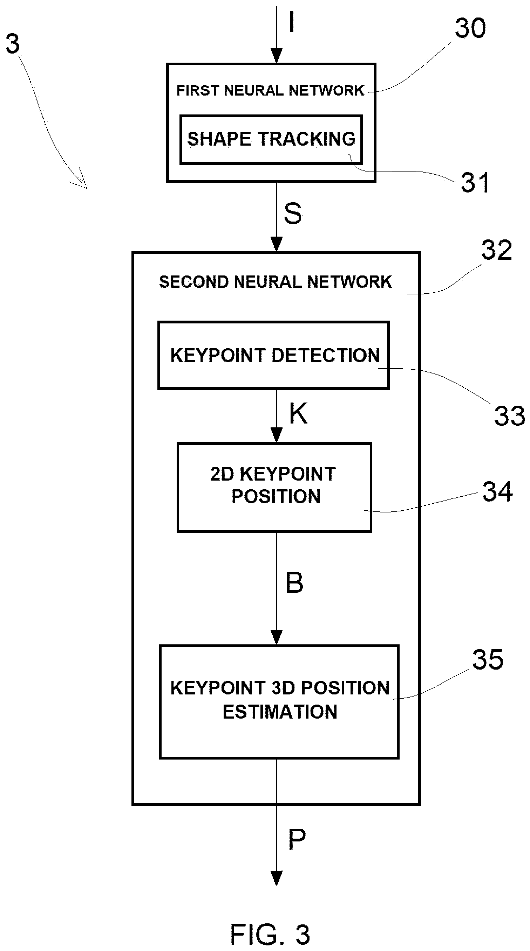

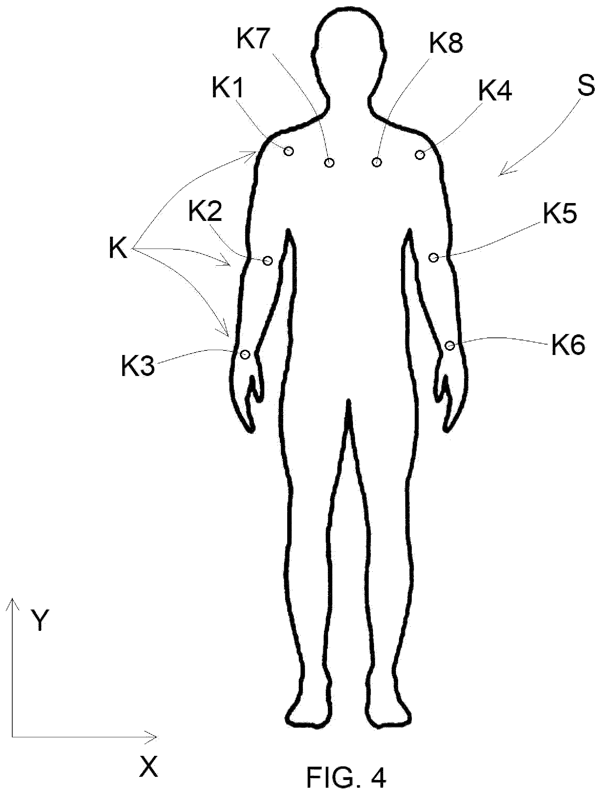

With reference to Fig. 3, the user pose algorithm (3) comprises a first neural network (30) wherein a shape tracking algorithm (31) is implemented. The shape tracking algorithm (31) receives the image (I) from the image detection means (1), evaluates whether a user has been captured in that image and, if a user has been captured, traces a shape (S) of the user, as shown in Fig. 4. In such a case, the shape (S) of the user is two-dimensional, i.e. on an X-Y plane.

The shape (S) of the user is sent to a second neural network (32) wherein a keypoint detection algorithm (33) is implemented and configured to detect certain keypoints (K) from the shape (S) of the user.

With reference to Fig. 4, the keypoints (K) can be identified at specific points of the shape (S) that allow a movement of the shape or parts of the shape to be identified. For illustrative purposes, in order to identify a movement of the right arm, three keypoints (K1, K2, K3) are used, respectively at the shoulder, elbow, and wrist of the right arm.

In order to identify a movement of the left arm, three keypoints (K4, K5, K6) are used, respectively at the shoulder, elbow, and wrist of the left arm.

In order to identify a rotation of the trunk, two keypoints (K7, K8) are used in two points on the trunk.

Although Fig. 4 illustrates an example of keypoint detection in a shape (S) of a normal standing person, the invention obviously extends to the possibility of detecting keypoints in a shape of disabled persons, such as persons in wheelchairs or persons with missing limbs or limb mobility disability.

In the second neural network (32) a keypoint position detection algorithm (34) is installed to detect a two-dimensional position (B) of the various keypoints (K) identified by the keypoint detection algorithm (33). In such a case, the position of the keypoints (K) is a two-dimensional position (B) on an X-Y plane. Otherwise said, each keypoint (K) is associated with a two-dimensional position (B) in Cartesian coordinates on an X-Y plane.

The two-dimensional position (B) of the keypoints (K) is sent to a 3D position estimation algorithm (35) configured to estimate a three-dimensional position (P) of each keypoint (K). In such a case, the position of the keypoints (K) is a three-dimensional position (P) in the space, according to a system of Cartesian axes X-Y-Z. Otherwise said, each keypoint (K) is associated with a three-dimensional position (P) in Cartesian coordinates in the X-Y-Z space.

The 3D position estimation algorithm (35) is part of the second neural network (32).

So the 3D position estimation algorithm (35) outputs the three-dimensional position (P) of each keypoint (K).

The 3D position estimation algorithm (35) is well known and is commercially available. For example, the 3D position estimation algorithm (35) uses the 3D model known as GHUM (Generative 3D Human Shape and Articulated Pose Model) to estimate the 3D pose of the person from the (two-dimensional) image. The 3D position is local with respect to the person's center of mass, and therefore no information about the user's distance from the image detection means (1) is required.

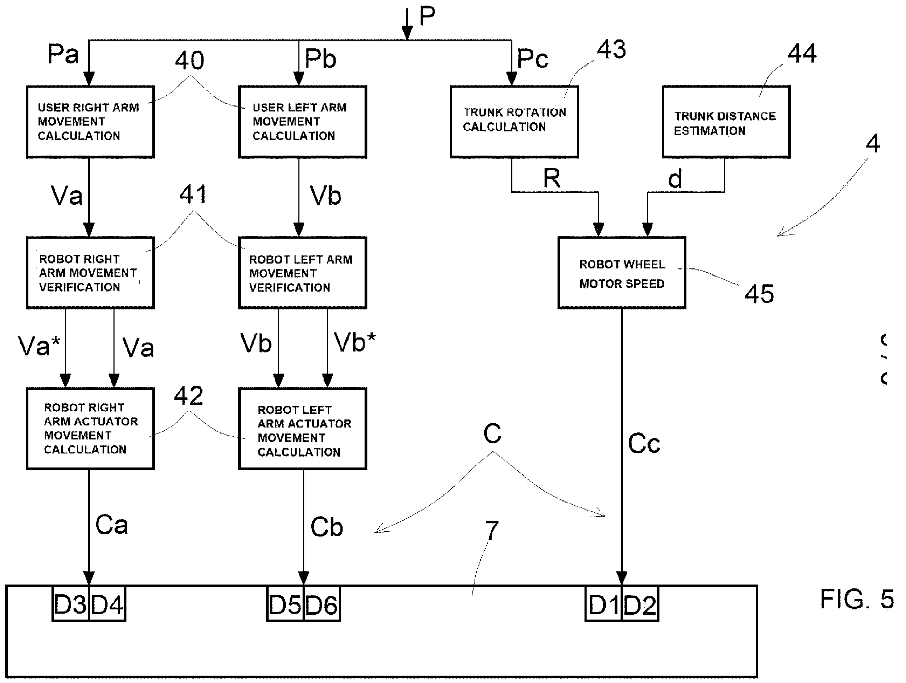

With reference to Fig. 5, the three-dimensional positions (P) of the keypoints (K) estimated by the 3D estimation algorithm (35) include first three-dimensional positions (Pa) of the keypoints (K1, K2, K3) for the movement of the right arm, second three-dimensional positions (Pb) of the keypoints (K4, K5, K6) for the movement of the left arm, and third three-dimensional positions (Pc) of the keypoints (K7, K8) relative to the rotation of the trunk.

The first three-dimensional positions (Pa) and the second three-dimensional positions (Pb) are treated differently from the third three-dimensional positions (Pc).

The robot pose algorithm (4) comprises a user arm movement calculation algorithm (40) that receives the first three-dimensional positions (Pa) relative to the keypoints of the user's right arm and the second three-dimensional positions (Pb) relative to the user's left arm.

Based on said first and second three-dimensional positions (Pa, Pb), the user arm movement calculation algorithm (40) constructs a first arm movement vector (Va) representing the direction of movement of the user's right arm, and a second arm movement vector (Vb) representing the direction of movement of the user's left arm.

The robot pose algorithm (4) comprises a robot arm movement verification algorithm (41) in which end-of-travel values are stored, defining a range of movement for each arm (63, 64) (Fig. 2) of the robot, i.e., a range in which each arm of the robot can move without hitting other parts of the robot.

The robot arm movement verification algorithm (41) receives the first arm movement vector (Va) representing the direction of movement of the user's right arm, and the second arm movement vector (Vb) representing the direction of movement of the user's left arm as input and verifies whether the arm movement vectors (Va, Vb) are comprised within the respective ranges of movement of the respective robot arm.

If one of the arm movement vectors (Va, Vb) is not comprised within the range of movement of the respective robot arm, the robot arm movement verification algorithm (41) corrects the arm movement vector (Va, Vb) and approximates it with a limited vector (Va*; Vb*) that is comprised within the range of movement of the robot's arm.

The arm movement vectors (Va, Vb) or the limited vectors (Va*, Vb*) are sent to a robot arm actuator movement calculation algorithm (42) which calculates a control signal (Ca, Cb) to actuate the respective robot arm. A first control signal (Ca) contains information on the movement to be imparted to the actuators (A3, A4) of the right arm to control the desired movement of the robot's right arm. A second control signal (Cb) contains information on the movement to be imparted to the actuators (A5, A6) of the left arm to control the desired movement of the robot's left arm.

With reference to Fig. 2, the first control signal (Ca) is sent to the third and fourth driver (D4, D5) which activate the third and fourth actuator (A3, A4) to move the right arm (63) of the robot. The second control signal (Cb) is sent to the fifth and sixth driver (D5, D6), which activate the fifth and sixth actuator (A5, A6) to move the left arm (64) of the robot.

Going back to Fig. 5, the robot pose algorithm (4) comprises a trunk rotation calculation algorithm (43) that receives the third three-dimensional positions (Pc) relative to the keypoints (K7, K8) of the user's trunk.

Based on the third three-dimensional positions (Pc), the trunk rotation calculation algorithm (43) calculates a rotation (R) executed by the user's trunk; starting from an initial position of the user's trunk, the rotation (R) takes into account how much the user's trunk has rotated to the right or to the left. Such a rotation (R) is also indicative of the direction in which the user intends to walk.

The robot pose algorithm (4) also comprises a trunk distance estimation algorithm (44) that is capable of estimating a distance (d) (Fig. 1) between the user's trunk and the image detection means (1) that must obviously be fixed. If the image detection means (1) comprise depth sensors, said distance (d) can be calculated accurately as distance between a target and a camera lens.

The robot pose algorithm (4) comprises a robot wheel motor speed calculation algorithm (45) configured to calculate a speed of the motors of the two actuators (A1, A2) of the wheels (60, 61) of the robot and output a third control signal (Cc) indicating the speed at which to drive the motors of the first and second actuators (A1, A2).

The robot wheel motor speed calculation algorithm (45) receives the rotation (R) of the user's trunk and the distance (d) of the user's trunk from the vision sensors as input.

If the rotation (R) indicates that the trunk has rotated to the right or left from an initial position, the motors of the actuators (A1, A2) of the wheels (60, 61) of the robot are rotated at different speeds so as to cause the robot (6) to rotate to the right or left.

If the distance (d) varies with respect to an initial distance, it means that the user is walking in a direction. In such a case, the motors of the actuators (A1, A2) of the wheels (60, 61) of the robot are rotated at the same speed to move the robot (6) forward in the same direction as the user.

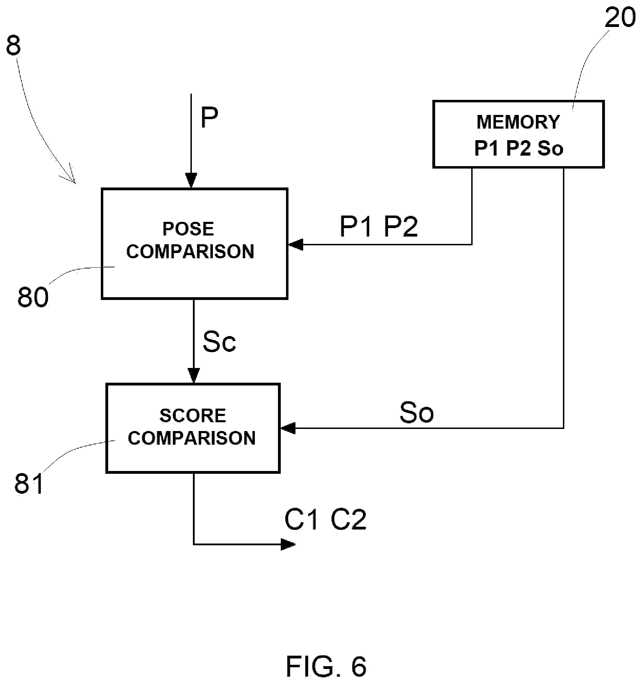

With reference to Figs. 1 and 6, the processing unit (2) has a memory (20) in which a start position (P1) indicative of a position of the user for starting the movement of the robot (6), and an end position (P2) indicative of a position of the user for ending the movement of the robot (6) are stored. By way of example, the start position (P1) may be the raising of the user's right arm and the end position (P2) may be a T-pose of the user.

The processing unit (2) implements a start and end position detection algorithm (8) that provides first comparison means (80) for comparing the three-dimensional position (P) of the keypoints obtained from the image (I) captured by the vision sensors with the start and end positions (P1, P2) stored in the memory.

Since the start and end positions (P1, P2) depend on the positions of the user's arms, in this case, the comparison will be made on the three-dimensional position of the keypoints (K1, K2, K3) of the right arm and on the three-dimensional position of the keypoints (K4, K5, K6) of the left arm. Following this comparison, a score (Sc) is output relative to the similarity of the three-dimensional position (P) of the arm keypoints with the start and end positions (P1, P2) that have been preset.

A threshold score (So) is also stored in the memory (20) and acts as a discriminator.

The start and end position detection algorithm (8) comprises second comparison means (81) that compare the score (Sc) with the threshold score (So). If the score (Sc) obtained is greater than the threshold score (So), in the case of similarity of the three-dimensional position (P) with the start position (P1), a start control signal (C1) is sent to the CPU (7) of the robot which enables the start of the movement of the robot (6).

If the score (Sc) is greater than the threshold score (So), in the case of similarity of the three-dimensional position (P) with the end position (P2), an end control signal (C2) is sent to the CPU (7) of the robot, which enables the end of the movement of the robot (6).

The memory (20) of the processing unit (2) can also be used to store a sequence of user movements. The sequence of user movements is stored as a sequence of control signals (CM) to be sent to the CPU (7) of the robot to make the robot perform a sequence of movements. In this way, the user can cause the robot (6) to execute the sequence of movements that has been stored in the CPU.

## Claims

1. User-robot interaction system (100) comprising:
- a robot (6) comprising a CPU (7) and actuators (A1, ....A6) controlled by said CPU (7),
- a wireless communication module (5) configured to send control signals (C) to said CPU (7) of the robot in wireless mode in order to drive said actuators (A1, ....A6) of the robot,
- image detection means (1) configured to detect images (I) of a user, and
- a processing unit (2) configured to receive said images (I) detected by the image detection means (1) and accordingly generate said control signals (C) that are sent to said CPU (7) of the robot via the communication module (5),
wherein the processing unit (2) is configured to implement:
- a user pose algorithm (3) configured to receive the images (I) from the image detection means (1), identify keypoints in the image and calculate a three-dimensional position (P) of said keypoints, and
- a robot pose algorithm (4) configured to receive the three-dimensional position (P) of the keypoints calculated by the user pose algorithm (3) and process control signals (C) suitable for driving the actuators (A1, ...A6) of the robot in order to move the robot in accordance with the user's movements,
**characterized in that**
said user pose algorithm (3) comprises:
- a first neural network (30) configured to implement a shape tracking algorithm (31) configured to receive the image (I) from the image detection means (1) and track a two-dimensional shape (S) of the user, and
- a second neural network (32) configured to receive said shape (S);
said second neural network (32) being configured to implement:
- a keypoint detection algorithm (33) configured to receive said shape (S) and detect certain keypoints (K) from the shape (S) of the user,
- a keypoint position detection algorithm (34) configured to detect a two-dimensional position (B) of the various keypoints (K) detected by the keypoint detection algorithm (33), and
- a 3D position estimation algorithm (35) configured to receive the two-dimensional position (B) of the keypoints (K) and estimate a three-dimensional position (P) of each keypoint (K).

2. The system (100) according to claim 1, wherein said keypoints (K) comprise keypoints (K1, K2, K3) suitable for identifying a movement of the user's right arm, and said three-dimensional positions (P) comprise first three-dimensional positions (Pa) relative to the keypoints of the user's right arm;
the robot's actuators comprise actuators (A3, A4) suitable for enabling a movement of a right arm (63) of the robot; and
said robot pose algorithm (4) comprises:
- a user arm movement calculation algorithm (40) that receives the first three-dimensional positions (Pa) relative to the keypoints of the right arm of the user and constructs a first arm movement vector (Va) representing the movement direction of the user's right arm; and
- a robot arm actuator movement calculation algorithm (42) configured to receive said first arm movement vector (Va) and calculate a first control signal (Ca) to drive said actuators (A3, A4) of the right arm (63) of the robot.

3. The system (100) according to claim 2, wherein said robot pose algorithm (4) comprises a robot arm movement verification algorithm (41) wherein end-of-travel values are stored, which define a movement range of the right arm (63) of the robot; said robot arm movement verification algorithm (41) being configured to receive the first arm movement vector (Va) as input and verify whether said first arm movement vector (Va) is comprised in the movement range; in the case that the first arm movement vector (Va) is not comprised in the movement range, the robot arm movement verification algorithm (41) corrects the first arm movement vector (Va) and approximates it with a limited vector (Va*) comprised in the movement range of the robot's arm; said limited vector (Va*) being sent to said robot arm actuator movement calculation algorithm (42).

4. The system (100) according to any one of the preceding claims, wherein said keypoints (K) comprise keypoints (K4, K5, K6) suitable for identifying a movement of a left arm of the user, and said three-dimensional positions (P) comprise second three-dimensional positions (Pb) related to the keypoints of the user's left arm;
said robot actuators comprise actuators (A5, A6) suitable for enabling a movement of a left arm (64) of the robot; and said robot pose algorithm (4) comprises:
- a user arm movement calculation algorithm (40) that receives the second three-dimensional positions (Pb) relative to the keypoints of the user's left arm and constructs a second arm movement vector (Vb) representing the movement direction of the user's left arm; and
- a robot arm actuator movement calculation algorithm (42) configured to receive said second arm movement vector (Vb) and calculate a second control signal (Cb) to drive said actuators (A4, A5) of the left arm (64) of the robot.

5. The system (100) according to claim 4, wherein said robot pose algorithm (4) comprises a robot arm movement verification algorithm (41) in which end-of-travel values are stored, which define a movement range of the left arm (64) of the robot; said robot arm movement verification algorithm (41) being configured to receive the second arm movement vector (Vb) as input and verify whether said second arm movement vector (Vb) is comprised in the movement range; in the case that the second arm movement vector (Vb) is not comprised in the movement range, the robot arm movement verification algorithm (41) corrects the second arm movement vector (Vb) and approximates it with a limited vector (Vb*) comprised in the movement range of the robot's left arm; said limited vector (Vb*) being sent to said robot arm actuator movement calculation algorithm (42).

6. The system (100) according to any one of the preceding claims, wherein said keypoints (K) comprise keypoints (K7, K8) suitable for identifying a rotation of the user's trunk; and said three-dimensional positions (P) comprise third three-dimensional positions (Pc) of the keypoints (K7, K8) relative to the rotation of the trunk;
said robot actuators comprise actuators (A1, A2) suitable for enabling a rotation of a trunk of the robot; and
said robot pose algorithm (4) comprises a trunk rotation calculation algorithm (43) that receives the third three-dimensional positions (Pc) relative to the keypoints (K7, K8) of the user's trunk and calculates a rotation (R) of the user's trunk.

7. The system (100) according to claim 6, wherein said actuators (A1, A2) suitable for enabling a rotation of the robot's trunk are two electric motors that drive two wheels (60, 61) into rotation; and
said robot pose algorithm (4) comprises:
- a trunk distance estimation algorithm (44) suitable for estimating a distance (d) between the user's trunk and the image detection means (1). Such a distance (d) can be calculated accurately in the case where the image detection means (1) also comprise depth sensors, as distance between a target and a camera lens; and
- a robot wheel motor speed calculation algorithm (45) configured to calculate a speed of the motors of the two actuators (A1, A2) of the wheels (60, 61) of the robot and output a third control signal (Cc) indicative of the speed applied to the motors of the actuators (A1, A2) of the wheels of the robot.

8. The system (100) according to any one of the preceding claims, wherein said processing unit (2) is configured to implement a start and end position detection algorithm (8); said start and end position detection algorithm (8) comprising:
- first comparison means (80) configured to compare the three-dimensional position (P) of the keypoints obtained from the image (I) taken by the vision sensors with start and end positions (P1, P2) stored in a memory (20) and output a score (Sc) relative to the similarity of the three-dimensional position (P) of the keypoints with the start and end positions (P1, P2); and
- second comparison means (81) configured to compare the score (Sc) with a threshold score (So) stored in the memory, in such a way that, if the score (Sc) is greater than the threshold score (So), in the case of similarity of the three-dimensional position (P) with the start position (P1), a start control signal (C1) is sent to the CPU (7) of the robot to enable the start of the movement of the robot (6); on the contrary, if the score (Sc) is greater than the threshold score (So), in the case of similarity of the three-dimensional position (P) with the end position (P2), an end control signal (C2) is sent to the CPU (7) of the robot to enable the end of the movement of the robot (6).

9. The system (100) according to any one of the preceding claims, further comprising a memory (20) of the processing unit (2) wherein a sequence of movements of the user is stored as sequence of control signals (C_{M}) to be sent to the CPU (7) of the robot to have the robot execute a sequence of movements.

## Patentansprüche

1. Mensch-Roboter-Interaktionssystem (100), umfassend:
- einen Roboter (6), umfassend eine Steuereinheit (7) und Aktuatoren (A1, ....A6), die von der Steuereinheit (7) gesteuert werden,
- ein Kommunikationsmodul (5) vom drahtlosen Typ, das konfiguriert ist, um in drahtlosem Modus Steuersignale (C) an die Steuereinheit (7) des Roboters zu senden, um die Aktuatoren (A1, ...A6) des Roboters anzutreiben,
- Bilderfassungsmittel (1), die konfiguriert sind, um Bilder (I) eines Benutzers zu erfassen, und
- eine Verarbeitungseinheit (2), die konfiguriert ist, um die von den Bilderfassungsmitteln (1) erfassten Bilder (I) zu empfangen und dementsprechend die Steuersignale (C) zu erzeugen, die mittels des Kommunikationsmoduls (5) an die Steuereinheit (7) des Roboters gesendet werden,
wobei der Verarbeitungseinheit (2) konfiguriert ist, um Folgendes zu implementieren:
- einen Benutzerposen-Algorithmus (3), der konfiguriert ist, um die Bilder (I) von den Bilderfassungsmitteln (1) zu empfangen, die Keypoints im Bild zu identifizieren und eine dreidimensionale Position (P) der Keypoints zu berechnen, und
- einen Roboterposen-Algorithmus (4), der konfiguriert ist, um die dreidimensionale Position (P) der vom Benutzerposen-Algorithmus (3) berechneten Keypoints zu empfangen und Steuersignale (C) auszuarbeiten, die geeignet sind, die Aktuatoren (A1, ...A6) des Roboters in Übereinstimmung mit den Benutzerbewegungen anzutreiben,
**dadurch gekennzeichnet, dass**
der Benutzerposen-Algorithmus (3) Folgendes umfasst:
- ein erstes neuronales Netzwerk (30), das konfiguriert ist, um einen Konturverfolgungsalgorithmus (31) zu implementieren, der konfiguriert ist, um das Bild (I) von den Bilderfassungsmitteln (1) zu empfangen und eine zweidimensionale Kontur (S) des Benutzers zu verfolgen, und
- ein zweites neuronales Netzwerk (32), das konfiguriert ist, um die Kontur (S) zu empfangen;
wobei das zweite neuronale Netzwerk (32) konfiguriert ist, um Folgendes zu implementieren:
- einen Keypoint-Erfassungsalgorithmus (33), der konfiguriert ist, um die Kontur (S) zu empfangen und bestimmte Keypoints (K) aus der Kontur (S) des Benutzers zu erfassen,
- einen Keypoint-Positionserfassungsalgorithmus (34), der konfiguriert ist, um eine zweidimensionale Position (B) der verschiedenen, vom Keypoint-Erfassungsalgorithmus (33) erfassten Keypoints (K) zu erfassen, und
- einen 3D-Positionsschätzungsalgorithmus (35), der konfiguriert ist, um die zweidimensionale Position (B) der Keypoints (K) zu empfangen und eine dreidimensionale Position (P) eines jeden Keypoints (K) zu schätzen.

2. System (100) nach Anspruch 1, wobei die Keypoints (K) Keypoints (K1, K2, K3) umfassen, die geeignet sind, eine Bewegung des rechten Arms des Benutzers zu identifizieren und wobei die dreidimensionalen Positionen (P) erste dreidimensionale Positionen (Pa) bezüglich der Keypoints des rechten Arms des Benutzers umfassen;
die Roboteraktuatoren umfassen Aktuatoren (A3, A4), die geeignet sind, eine Bewegung eines rechten Arms (63) des Roboters zu ermöglichen; und
der Roboterposen-Algorithmus (4) umfasst Folgendes:
- einen Benutzerarm-Bewegungsberechnungsalgorithmus (40), der die ersten dreidimensionalen Positionen (Pa) bezüglich der Keypoints des rechten Arms des Benutzers empfängt und einen ersten Armbewegungsvektor (Va) konstruiert, der die Bewegungsrichtung des rechten Arms des Benutzers repräsentiert; und
- einen Roboterarmaktuator-Bewegungsberechnungsalgorithmus (42), der konfiguriert ist, um den ersten Armbewegungsvektor (Va) zu empfangen und ein erstes Steuersignal (Ca) zu berechnen, um die Aktuatoren (A3, A4) des rechten Arms (63) des Roboters anzutreiben.

3. System (100) nach Anspruch 2, wobei der Roboterposen-Algorithmus (4) einen Roboterarm-Bewegungsprüfungsalgorithmus (41) umfasst, wobei Endanschlagwerte gespeichert werden, die einen Bewegungsbereich des rechten Arms (63) des Roboters definieren; wobei der Roboterarm-Bewegungsprüfungsalgorithmus (41) konfiguriert ist, um als Eingang den ersten Armbewegungsvektor (Va) zu empfangen und zu prüfen, ob der erste Armbewegungsvektor (Va) sich innerhalb des Bewegungsbereichs befindet; falls der erste Armbewegungsvektor (Va) sich nicht innerhalb des Bewegungsbereichs befindet, korrigiert der Roboterarm-Bewegungsprüfungsalgorithmus (41) den ersten Armbewegungsvektor (Va) und approximiert ihn mit einem begrenzten Vektor (Va*), der in den Roboterarmbewegungsbereich des Roboterarms fällt; wobei der begrenzte Vektor (Va*) an den Roboterarmaktuator-Bewegungsberechnungsalgorithmus (42) gesendet wird.

4. System (100) nach einem der vorstehenden Ansprüche, wobei die Keypoints (K) Keypoints (K4, K5, K6) umfassen, die geeignet sind, eine Bewegung eines linken Arms des Benutzers zu identifizieren und wobei die dreidimensionalen Positionen (P) zweite dreidimensionale Positionen (Pb) bezüglich der Keypoints des linken Arms des Benutzers umfassen;
die Roboteraktuatoren umfassen Aktuatoren (A5, A6), die geeignet sind, eine Bewegung eines linken Arms (64) des Roboters zu ermöglichen; und wobei der Roboterposen-Algorithmus (4) Folgendes umfasst:
- einen Benutzerarm-Bewegungsberechnungsalgorithmus (40), der die zweiten dreidimensionalen Positionen (Pb) bezüglich der Keypoints des linken Arms des Benutzers empfängt und einen zweiten Armbewegungsvektor (Vb) konstruiert, der die Bewegungsrichtung des linken Arms des Benutzers repräsentiert; und
- einen Roboterarmaktuator-Bewegungsberechnungsalgorithmus (42), der konfiguriert ist, um den zweiten Armbewegungsvektor (Vb) zu empfangen und ein zweites Steuersignal (Cb) zu berechnen, um die Aktuatoren (A4, A5) des linken Arms (64) des Roboters zu betätigen.

5. System (100) nach Anspruch 4, wobei der Roboterposen-Algorithmus (4) einen Roboterarm-Bewegungsprüfungsalgorithmus (41) umfasst, wobei Endanschlagwerte gespeichert werden, die einen Bewegungsbereich des linken Arms (64) des Roboters definieren; wobei der Roboterarm-Bewegungsprüfungsalgorithmus (41) konfiguriert ist, um als Eingang den zweiten Armbewegungsvektor (Vb) zu empfangen und zu prüfen, ob der zweite Armbewegungsvektor (Vb) sich innerhalb des Bewegungsbereichs befindet; falls der zweite Armbewegungsvektor (Vb) sich nicht innerhalb des Bewegungsbereichs befindet, korrigiert der Roboterarm-Bewegungsprüfungsalgorithmus (41) den zweiten Armbewegungsvektor (Vb) und approximiert ihn mit einem begrenzten Vektor (Vb*), der in den Bewegungsbereich des linken Roboterarms fällt; wobei der begrenzte Vektor (Vb*) an den Roboterarm-Aktuatorbewegungsberechnungsalgorithmus (42) gesendet wird.

6. System (100) nach einem der vorstehenden Ansprüche, wobei die Keypoints (K) Keypoints (K7, K8) umfassen, die geeignet sind, eine Drehung des Rumpfes des Benutzers zu identifizieren; und wobei die dreidimensionalen Positionen (P) dritte dreidimensionale Positionen (Pc) der Keypoints (K7, K8) bezüglich der Drehung des Rumpfes umfassen;
die Roboteraktuatoren umfassen Aktuatoren (A1, A2), die geeignet sind, eine Drehung eines Rumpfes (62) des Roboters zu ermöglichen; und
der Roboterposen-Algorithmus (4) umfasst einen Rumpfdrehungsberechnungsalgorithmus (43), der die dritten dreidimensionalen Positionen (Pc) bezüglich der Keypoints (K7, K8) des Benutzerrumpfes empfängt und eine Drehung (R) des Benutzerrumpfes berechnet.

7. System (100) nach Anspruch 6, wobei die Aktuatoren (A1, A2), die geeignet sind, eine Drehung des Roboterrumpfes zu ermöglichen, zwei Elektromotoren sind, die zwei Räder (60, 61) in Drehung versetzen; und
wobei der Roboterposen-Algorithmus (4) Folgendes umfasst:
- einen Rumpfabstandsschätzungsalgorithmus (44), der geeignet ist, einen Abstand (d) zwischen dem Benutzerrumpf und den Bilderfassungsmitteln (1) zu schätzen. Ein derartiger Abstand (d) kann, sofern die Bilderfassungsmittel (1) auch Tiefensensoren umfassen, präzise als Abstand zwischen einem Ziel und einer Kameralinse berechnet werden; und
- einen Roboterräder-Motorengeschwindigkeitsberechnungsalgorithmus (45), der konfiguriert ist, um eine Motorengeschwindigkeit der beiden Aktuatoren (A1, A2) der Räder (60, 61) des Roboters zu berechnen und ein drittes Steuersignal (Cc) auszugeben, das die Geschwindigkeit anzeigt, mit der die Motoren der Aktuatoren (A1, A2) der Roboterräder betätigt werden.

8. System (100) nach einem der vorstehenden Ansprüche, wobei Verarbeitungseinheit (2) konfiguriert ist, um einen Anfangs- und Endpositionserfassungsalgorithmus (8) zu implementieren; wobei der Anfangs- und Endpositionserfassungsalgorithmus (8) Folgendes umfasst:
- erste Vergleichsmittel (80), die konfiguriert sind, um die dreidimensionale Position (P) der Keypoints, die aus dem von den visuellen Sensoren aufgezeichneten Bild (I) erhalten werden, mit Anfangs- und Endpositionen (P1, P2) zu vergleichen, die in einem Speicher (20) gespeichert werden, und einen Score (Sc) bezüglich der Ähnlichkeit der dreidimensionalen Position (P) der Keypoints mit den Anfangs- und Endpositionen (P1, P2) auszugeben; und
- zweite Vergleichsmittel (81), die konfiguriert sind, um den Score (Sc) mit einem im Speicher gespeicherten Schwellenscore (So) vergleichen, derart, dass wenn der Score (Sc) größer ist als der Schwellenscore (So), im Falle von Ähnlichkeit der dreidimensionalen Position (P) mit der Anfangsposition (P1), ein Anfangssteuersignal (C1) an die Steuereinheit (7) des Roboters gesendet wird, das den Anfang der Bewegung des Roboters (6) aktiviert; wenn hingegen der Score (Sc) größer ist als der Schwellenscore (So), im Falle von Ähnlichkeit der dreidimensionalen Position (P) mit der Endposition (P2), ein Endsteuersignal (C2) an die Steuereinheit (7) des Roboters gesendet wird, das das Ende der Bewegung des Roboters (6) aktiviert.

9. System (100) nach einem der vorstehenden Ansprüche, umfassend ferner einen Speicher (20) der Verarbeitungseinheit (2), in dem eine Bewegungssequenz des Benutzers als Sequenz von Steuersignalen (C_{M}) gespeichert wird, die an die Steuereinheit (7) des Roboters gesendet wird, um den Roboter eine Bewegungssequenz ausführen zu lassen.

## Revendications

1. Système (100) d'interaction entre comprenant :
- un robot (6) comprenant une CPU (ou unité centrale de traitement) (7) et des actuateurs (A1, ....A6) contrôlés par ladite CPU (7),
- un module de communication (5) du type sans fil configuré pour envoyer, en mode sans fil, des signaux de commande (C) à ladite CPU (7) du robot, pour contrôler lesdits actuateurs (A1, ....A6) du robot,
- des moyens de détection d'images (1) configurés pour relever des images (I) d'un utilisateur, et
- une unité de traitement (2) configurée pour recevoir lesdites images (I) relevées par les moyens de détection d'images (1) et, en conséquence, générer lesdits signaux de commande (C) qui, via le module de communication (5), sont envoyés à ladite CPU (7) du robot,
où l'unité de traitement (2) est configurée pour implémenter :
- un algorithme de pose de l'utilisateur (3) configuré pour recevoir les images (I) qui proviennent des moyens de détection d'images (1), identifier des points-clés dans l'image et calculer une position tridimensionnelle (P) des susdits points-clés, et
- un algorithme de pose du robot (4) configuré pour recevoir la position tridimensionnelle (P) des points-clés calculée par l'algorithme de pose de l'utilisateur (3) et traiter des signaux de commande (C) aptes à activer les actuateurs (A1, ...A6) du robot pour faire déplacer le robot conformément aux mouvements de l'utilisateur,
**caractérisé en ce que**
ledit algorithme de pose de l'utilisateur (3) comprend :
- un premier réseau neuronal (30) configuré pour implémenter un algorithme de traçabilité de forme (31) configuré pour recevoir l'image (I) depuis les moyens de détection d'images (1) et tracer une forme (S) bidimensionnelle de l'utilisateur, et
- un second réseau neuronal (32) configuré pour recevoir ladite forme (S) ;
ledit second réseau neuronal (32) étant configuré pour implémenter :
- un algorithme de repérage des points-clés (33) configuré de manière à recevoir ladite forme (S) et relever certains points-clés (K) de la forme (S) de l'utilisateur,
- un algorithme de repérage de la position des points-clés (34) configuré pour relever une position bidimensionnelle (B) des différents points-clés (K) relevés par l'algorithme de repérage des points-clés (33), et
- un algorithme d'évaluation de la position en 3D (35) configuré pour recevoir la position bidimensionnelle (B) des points-clés (K) et évaluer une position tridimensionnelle (P) de chaque point-clé (K).

2. Système (100) selon la revendication 1, où lesdits points-clés (K) comprennent des points-clés (K1, K2, K3) aptes à identifier un mouvement d'un bras droit de l'utilisateur et lesdites positions tridimensionnelles (P) comprennent des premières positions tridimensionnelles (Pa) relatives aux points-clés du bras droit de l'utilisateur ;
lesdits actuateurs du robot comprennent des actuateurs (A3, A4) aptes à consentir un mouvement d'un bras droit (63) du robot ; et
ledit algorithme de pose du robot (4) comprend :
- un algorithme de calcul du mouvement du bras droit de l'utilisateur (40) qui reçoit les premières positions tridimensionnelles (Pa) relatives aux points-clés du bras droit de l'utilisateur et construit un premier vecteur de mouvement du bras (Va) qui représente la direction de mouvement du bras droit de l'utilisateur ; et
- un algorithme de calcul du mouvement des actuateurs du bras droit du robot (42) configuré pour recevoir ledit premier vecteur de mouvement du bras (Va) et calculer un premier signal de commande (Ca) pour activer lesdits actuateurs (A3, A4) du bras droit (63) du robot.

3. Système (100) selon la revendication 2, où ledit algorithme de pose du robot (4) comprend un algorithme de vérification du mouvement du bras du robot (41) dans lequel sont mémorisées des valeurs de fin de course qui définissent une plage de mouvement du bras droit (63) du robot ; ledit algorithme de vérification du bras du robot (41) étant configuré pour recevoir en entrée le premier vecteur de mouvement du bras (Va) et vérifier si ledit premier vecteur de mouvement du bras (Va) se trouve dans la plage de mouvement ; si le vecteur de mouvement du bras (Va) ne se trouve pas dans la plage de mouvement, l'algorithme de vérification de mouvement du bras du robot (41) corrige le premier vecteur de mouvement du bras (Va) et le rapproche au plus près moyennant un vecteur limité (Va*) qui rentre dans la plage de mouvement du bras du robot ; ledit vecteur limité (Va*) étant envoyé au ledit algorithme de calcul de mouvement des actuateurs du bras du robot (42).

4. Système (100) selon l'une quelconque des revendications précédentes, où lesdits points-clés (K) comprennent des points-clés (K4, K5, K6) aptes à identifier un mouvement du bras gauche de l'utilisateur et lesdites positions tridimensionnelles (P) comprennent des secondes positions tridimensionnelles (Pb) relatives aux points-clés du bras gauche de l'utilisateur ;
lesdits actuateurs du robot comprennent des actuateurs (A5, A6) aptes à consentir un mouvement du bras gauche (64) du robot ; et ledit algorithme de pose du robot (4) comprend :
- un algorithme de calcul du mouvement du bras de l'utilisateur (40) qui reçoit les secondes positions tridimensionnelles (Pb) relatives aux points-clés du bras gauche de l'utilisateur et construit un second vecteur de mouvement du bras (Vb) qui représente la direction de mouvement du bras gauche de l'utilisateur ; et
- un algorithme de calcul du mouvement des actuateurs du bras du robot (42) configuré pour recevoir ledit second vecteur de mouvement du bras (Vb) et calculer un second signal de commande (Cb) pour activer lesdits actuateurs (A4, A5) du bras gauche (64) du robot.

5. Système (100) selon la revendication 4, où ledit algorithme de pose du robot (4) comprend un algorithme de vérification du mouvement du bras du robot (41) dans lequel sont mémorisées des valeurs de fin de course qui définissent une plage de mouvement du bras gauche (64) du robot ; ledit algorithme de vérification du mouvement du bras du robot (41) étant configuré pour recevoir en entrée le second vecteur de mouvement du bras (Vb) et vérifier si ledit second vecteur de mouvement du bras (Vb) se trouve dans la plage de mouvement ; si le second vecteur de mouvement du bras (Vb) ne se trouve pas dans la plage de mouvement, l'algorithme de vérification du mouvement du bras du robot (41) corrige le second vecteur de mouvement du bras (Vb) et le rapproche au plus près moyennant un vecteur limité (Vb*) qui rentre dans la plage de mouvement du bras gauche du robot ; ledit vecteur limité (Vb*) étant envoyé au susdit algorithme de calcul du mouvement des actuateurs du bras du robot (42).

6. Système (100) selon l'une quelconque des revendications précédentes, où lesdits points-clés (K) comprennent les points-clés (K7, K8) aptes à identifier une rotation du buste de l'utilisateur ; et lesdites positions tridimensionnelles (P) comprennent des troisièmes positions tridimensionnelles (Pc) des points-clés (K7, K8) relatives à la rotation du buste ;
lesdits actuateurs du robot comprennent les actuateurs (A1, A2) aptes à consentir une rotation du buste (62) du robot ; et
ledit algorithme de pose du robot (4) comprend un algorithme de calcul de la rotation du buste (43) qui reçoit les troisièmes positions tridimensionnelles (Pc) relatives aux points-clés (K7, K8) du buste de l'utilisateur et calcule une rotation (R) qui exécute le buste de l'utilisateur.

7. Système (100) selon la revendication 6, où lesdits actuateurs (A1, A2) aptes à consentir une rotation du buste du robot sont deux moteurs électriques qui dirigent en rotation deux roues (60, 61) ; et
ledit algorithme de pose du robot (4) comprend :
- un algorithme d'évaluation de la distance du buste (44) qui est en mesure d'évaluer une distance (d) entre le buste de l'utilisateur et les moyens de détection d'images (1). Cette distance (d) peut être calculée avec précision si les moyens de détection d'images (1) comprennent également des capteurs de profondeur, comme distance entre une cible et un objectif d'une caméra ; et
- un algorithme de calcul de la vitesse des moteurs des roues du robot (45) configuré pour calculer une vitesse des moteurs des deux actuateurs (A1, A2) des roues (60, 61) du robot et émettre en sortie un troisième signal de commande (Cc) indicatif de la vitesse à appliquer aux moteurs des actuateurs (A1, A2) des roues du robot.

8. Système (100) selon l'une quelconque des revendications précédentes, où ladite unité de traitement (2) est configurée pour implémenter un algorithme de repérage de la position de début et de fin (8) ; ledit algorithme de repérage de position de début et de fin (8) comprenant :
- des premiers moyens de comparaison (80) configurés pour comparer la position tridimensionnelle (P) des points-clés obtenue via l'image (I) capturée par les capteurs visuels avec positions de début et de fin (P1, P2) mémorisées dans une mémoire (20) et émettre en sortie un score (Sc) relativement à la similarité de la position tridimensionnelle (P) des points-clés avec les positions de début et de fin (P1, P2) ; et
- des seconds moyens de comparaison (81) qui comparent le score (Sc) avec un score de seuil (So) mémorisé dans la mémoire, de façon que, si le score (Sc) obtenu est majeur du score de seuil (So), en présence de similarité de la position tridimensionnelle (P) avec la position de début (P1), un signal de commande de début (C1) est envoyé à la CPU (7) du robot qui active le début du mouvement du robot (6) ; tandis que si le score (Sc) est majeur du score de seuil (So), en présence de similarité de la position tridimensionnelle (P) avec la position de fin (P2), un signal de commande de fin (C2) est envoyé à la CPU (7) du robot qui active la fin du mouvement du robot (6).

9. Système (100) selon l'une quelconque des revendications précédentes, comprenant également une mémoire (20) de l'unité de traitement (2) dans laquelle est mémorisée une séquence de mouvements de l'utilisateur, sous forme de séquence de signaux de commande (C_{M}) à envoyer à la CPU (7) du robot pour faire exécuter au robot une séquence de mouvements.
